Europäisches Patentamt

(19) European Patent Office

Office européen des brevets

(11) Publication number : **0 324 765 B1**

(12) **EUROPEAN PATENT SPECIFICATION**

(45) Date of publication of patent specification :
**19.02.92 Bulletin 92/08**

(51) Int. Cl.⁵ : **B42F 13/12,** A63H 33/06,
G09F 3/03, F16B 5/07,
F16B 19/00

(21) Application number : **87906308.9**

(22) Date of filing : **30.09.87**

(86) International application number :
**PCT/GB87/00690**

(87) International publication number :
**WO 88/02311 07.04.88 Gazette 88/08**

(54) **BINDER.**

(30) Priority : **30.09.86 GB 8623480**
**30.09.86 GB 8623481**
**23.10.86 GB 8625408**
**10.11.86 GB 8626796**
**05.01.87 GB 8700082**
**05.01.87 GB 8700084**

(43) Date of publication of application :
**26.07.89 Bulletin 89/30**

(45) Publication of the grant of the patent :
**19.02.92 Bulletin 92/08**

(84) Designated Contracting States :
**DE FR GB IT NL SE**

(56) References cited :
**AU-B- 5 674 280**
**FR-A- 826 709**
**FR-A- 2 264 209**
**GB-A- 216 287**

(56) References cited :
**GB-A- 1 181 022**
**GB-A- 1 305 788**
**US-A- 2 610 879**
**US-A- 3 604 145**
**US-A- 3 701 605**
**US-A- 4 192 620**
**US-A- 4 340 316**

(73) Proprietor : **Gram, Jes**
**Pilegaardsparken 15**
**DK-3460 Birkerod (DK)**

(72) Inventor : **Sorensen, Jens Ole**
**P.O.Box 2274**
**Rancho Santa Fe, California 92067 (US)**
Inventor : **Gram, Ole**
**Pilegaardsparken 10**
**DK-3460 Birkerod (DK)**

(74) Representative : **Wilson, Nicholas Martin et al**
**WITHERS & ROGERS 4 Dyer's Buildings**
**Holborn**
**London EC1N 2JT (GB)**

## Description

This invention relates to a fastenable product such as a binder for retaining paper sheets provided with a number of holes along one side edge.

The invention also includes a method of making such products.

In the form of a binder several forms of loose-leaf binder for sheets of paper are known. For example, a conventional ring binder consists of a front, a back and a spine and the spine has secured to it a metal member including a number of releasable rings which are positioned so as to pass through the holes in the edge of the sheets of paper. Simpler forms of binder have been disclosed for example in U.S. Patent Specification Nos.3260264, 3612709, 4165193, 4307972 and 4340316. In U.S. Patent Specification No.3260264 a binder for permanently binding a book is disclosed which comprises a one piece plastics injection moulding in which a plurality of solid posts in one leaf of the binder are permanently engaged with opposed perforations in the other leaf of the binder once the pages of the book have been positioned on the posts.

U.S. Patent Specification No.4340316 discloses a binder in which the front and back leaves and the spine are made from a single sheet of plastic material. Then to the back sheet is secured a separate member including three protrusions and to the front sheet is secured a member including three cavities. The co-operating protrusions and cavities are made from relatively strong material such that the cavities are made with an elongate transverse perimeter relative to the perimeter of the posts in order to allow the cavities to flex during insertion of the protrusion in order to provide a positive locking action.

GB-A-216287 discloses a folder for holding sheets in paper. A series of hollow tapered protrusions are fixed in one leaf of the folder and a corresponding series of holes are formed in the other leaf. In use, the perforations in a sheet of paper are placed over the protrusions of one folder can pass through the holes in the other leaf and enter into the wide ends of the protrusions of a second folder in order to connect the first folder to the second folder.

Even simpler folders have been proposed and used which simply consist of two sheets of plastic material which are closed along two or three adjacent edges so that papers can be simply positioned and retained between the sheets. Unfortunately, with such an arrangement, it is not possible to flick through the pages of papers retained in view of the secured edges.

This invention seeks to overcome or mitigate the drawbacks of the prior art by providing an improved fastenable product.

According to the present invention there is provided a binder for paper sheets with holes, comprising a back member with at least one protrusion projecting therefrom, and a front member with at least one opening therein, the protrusion(s) being so dimensioned as to receive paper sheets with holes thereon and to be fitted and located in the opening(s) in order to retain sheet within the binder, one such binder being connectable with a second such binder, characterized in that the opening(s) is/are in the form of a cavity, and a projecting end opposite that open end of the cavity(ies) of the front member of one such binder may be fitted and releasably held by a hollow end opposite the projecting protrusion(s) of the back member of a second such binder.

In accordance with another aspect of the invention, there is provided a method of forming a binder as aforesaid.

The invention will now be described by way of example with reference to the drawings in which:

Figure 1 is a plan view of a first embodiment of binder;

Figure 2 is a section on AA in Figure 1;

Figure 3 is a section on BB in Figure 1;

Figure 4 is a plan view of the binder of Figure 1, including a plurality of sheets of paper;

Figure 5 is a partial cross-section on CC in Figure 4;

Figure 6 is a plan view a second embodiment of binder;

Figures 7 and 8 are detail views of different forms of cavity where there is an opening right through the cavity and the co-operating protrusions in order to receive the rings of a ring binder;

Figure 9 shows a further alternative embodiment of binder;

Figure 10 is a perspective view of a plurality of binders in accordance with the invention secured together;

Figure 11 is a diagrammatic cross-section view of two binders in accordance with the invention secured together;

Figure 12 is a plan view of a further embodiment of binder;

Figure 13 is a plan view of an alternative embodiment of binder similar to Figure 12;

Figure 14 is a cross-sectional side elevation of one of the binders of Figure 11;

Figures 15, 16 and 17 show side elevations of further alternative arrangements of binders;

Figure 18 is partial cross-sectional view of the connection between two reinforced binders;

Figure 19 is a prior art arrangement showing the interconnection of a protrusion with a cavity, and

Figures 20 and 21 illustrate alternative configuration of protrusion for a binder with respect to a co-operable cavity.

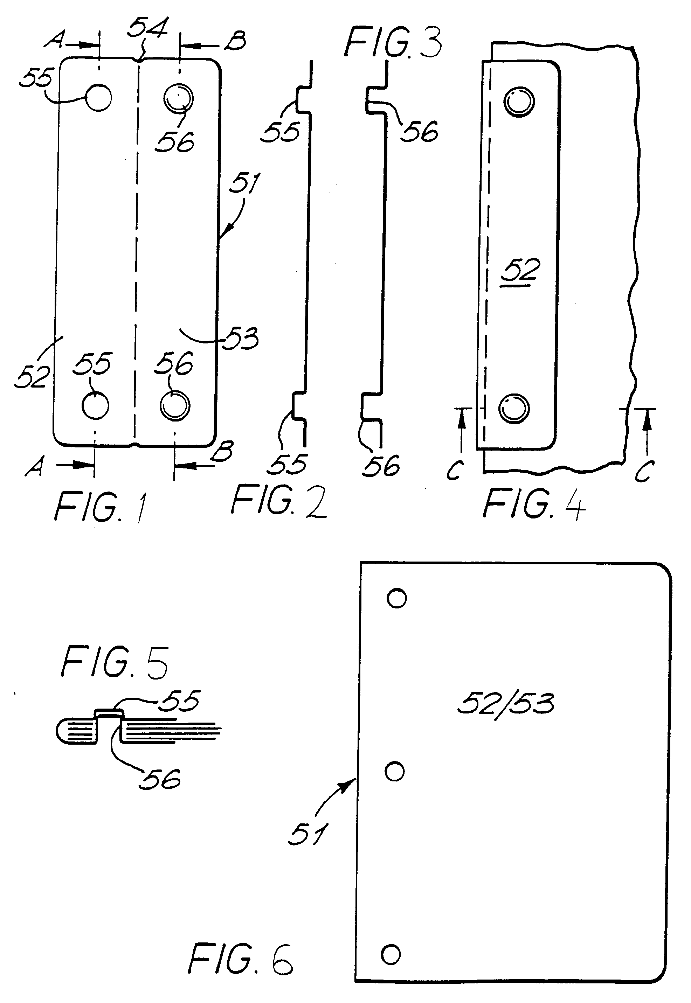

In Figure 1 a binder 51 comprises a front member 52 and a back member 53 interconnected by a spine portion 54. The front member 52, the back member 53 and the spine are formed from a single sheet of plastics material, the spine simply consisting of a folding position between the front member 52 and the back member 53. As seen from Figure 2 the front member 52 includes two spaced cavities 55. On the back member 53 there are two spaced protrusions 56 which, in the folded position of the binder as shown in Figure 4 project inwardly towards the front and are positioned so as to fit and to be releasably held by the cavities 55. The protrusions 56 and cavities 55 are spaced apart by a spacing corresponding to the spacing of holes formed along ons side edge of sheets of paper so that the sheets of paper may be positioned on the protrusions 56 so as to be held by the binder 51 as indicated in Figures 4 and 5. In the first embodiment the binder does not extend along the whole side edge of the sheets of paper nor does it extend over the full extent of the width of the sheets of paper.

In embodiment of Figure 6 of the front member 52 and the back member 53 are larger leaves which cover the complete size of the sheets of paper to be retained within the binder. In addition, instead of simply being provided with two spaced protrusions and cavities 56 and 55 the embodiment of Figure 6 has three such connections.

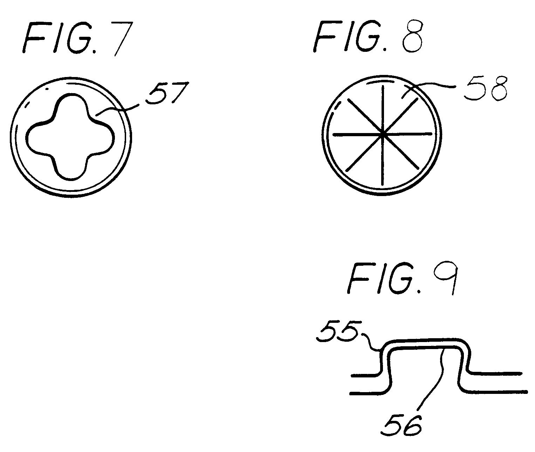

In some embodiments it will be preferred to include a hole extending right through the co-operating protrusions and cavities so that the binders may conveniently fit within a conventional ring binder. In such an arrangement, rather than simply providing bare openings, the openings within the cavities 55 on the outside face of the front member 52 may be provided with cosmetic flaps 57 or 58 as shown in the alternative arrangements of Figures 7 and 8. In the embodiment shown in Figure 8 an added advantage is that no surplus material needs to be removed.

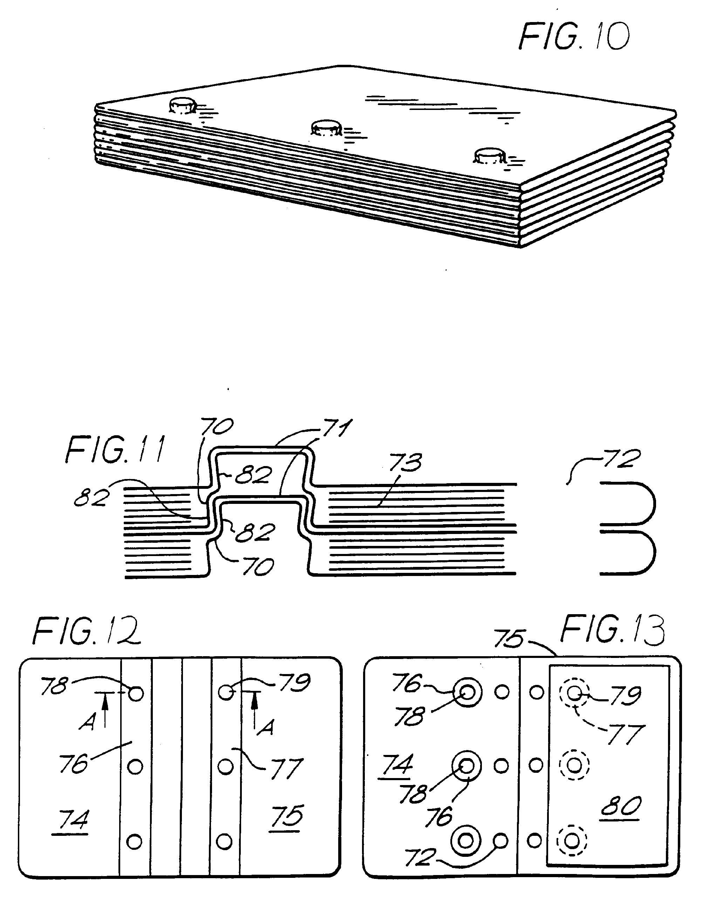

Figure 9 shows a different arrangement. In Figure 9 the protrusions and the cavities are of the same shape.

The advantages of the embodiments of binder so far described are that the preferred binder is completely made from one sheet of plastics film which may be formed for example by vacuum forming, pressure forming, thermal forming, injecting moulding or cold forming. However, within the scope of the invention it is possible to have a binder with a separate front with cavity(ies) and back with protrusion(s) where the back is thicker and perhaps made of coloured plastics material. However, the forming of the two parts each from a single sheet of plastics film material simplifies the manufacturing process from the prior art.

The embodiments of binder disclosed with respect to Figures 1 to 9 concentrate on a binder consisting of two members, one forming the front and one forming the back. However, it will be understood, that a binder may be a multi-leaved binder with intermediate members forming separators or binders including only a front and back member may be stacked and releasably interconnected one upon the other. The front and back members may be separate leaves or may be joined in pairs along respective spines. Where the front and back members are separate they are preferably identical leaves with the protrusion(s) in one surface and the cavity(ies) in the other, a cavity being formed in the hollow protrusion. For example, in Figure 10 a plurality of binders in accordance with the invention are shown secured together.

In Figure 11 two binders are shown connected together in partial cross-section. This Figure illustrates how the protrusions 70 and cavities 71 of respective binder fit together and how the projecting end of the cavity 71 of one binder fits in the hollow end of a protrusion 70 of an adjacent binder. The right hand side of Figure 11 also shows holes 72 for receiving the rings of a ring binder and reference 73 indicates sheets of paper held by the binder.

A plan view of a particular form of binder is shown in Figure 12 and comprises front and back leaves 74, 75 and front and back members 76 and 77. The front and back members 76 and 77 are separate strips secured to the respective front and back leaves 34 and 75 and including respectively cavities 78 and protrusions 79.

Figure 13 is a similar embodiment to Figure 12 except that the cavities 78 and protrusions 79 are supported on individual front and back members 76, 77 which in turn are secured to the respective front and back leaves 74 and 75. A sheet of paper 80 received on the protrusions 79 can be seen to the right in Figure 13 and reference 72 indicates the holes for the receipt of the rings of a ring binder.

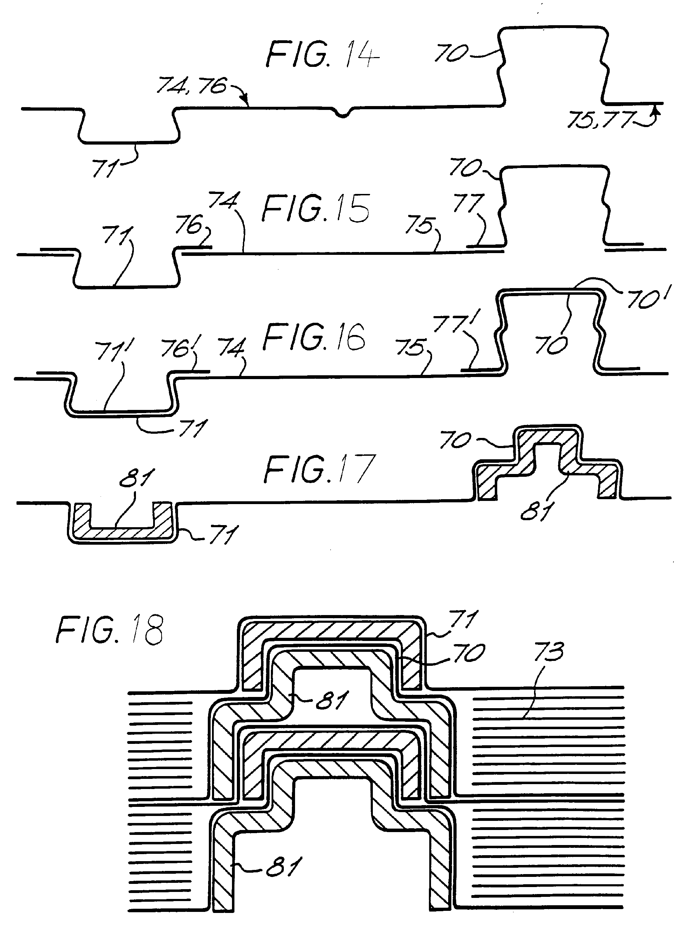

In Figure 14 one of the binders of Figure 11 is shown but excluding the holes 72. In this embodiment the front and back members 76,77 are formed by the front and back leaves 74, 75.

Figure 15 shows a similar embodiment to that shown in Figure 14 except that the cavities 71 and protrusions 70 are separate from the front and back leaves 74 and 75 and their respective front and back members 76 and 77 are, for example, welded onto the respective front and back leaves 74 and 75. The protrusions and cavities may be manufactured by injection moulding or any other suitable means. In this arrangement the binder may be a thin Polypropylene of 80 micron thick whereas the cavities and protrusions may be made out of a heavier Polypropylene material such as 250 micron thick and then welded together. The front members with cavities 71 and the back members with protrusions 70 may either be fitted onto the holes or fitted into the holes formed in the front and back leaves 74 and 75.

The cavities 71 and protrusions 70 formed in the front and back leaves in Figure 16 are strengthened by protrusions 70′ with back member 77′ and cavity 71' and front member 76'. In Figure 17 reinforcement 81 is placed within the respective cavities 71 and protrusions 70.

Typically reinforced binders of the type illustrated in Figure 17 may be fitted together as shown in Figure 18 in the same way as illustrated in Figure 11. In Figure 18, the indenting which is shown in Figure 11 as 82 which helps lock the respective parts together is not shown but would be present in practice.

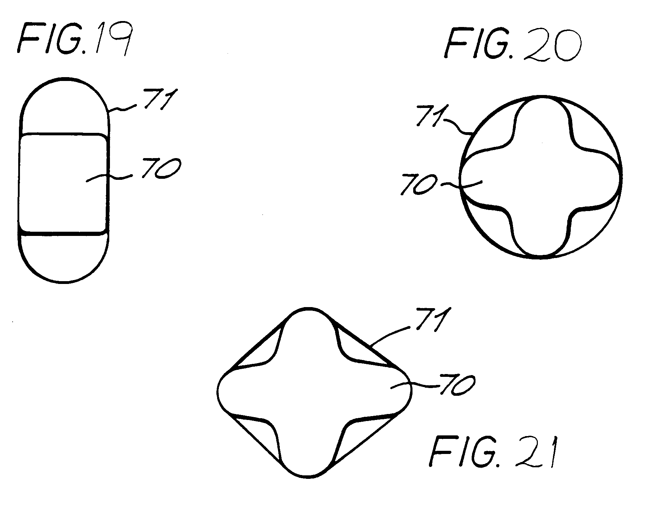

Figure 19 is a drawing of a prior art binder connection showing how a rigid protrusion 70 co-operates within a much larger cavity 71 so that the cavity 71 can bow outwardly to allow insertion of the protrusions 70 of stiff material. In contrast Figures 20 and 21 illustrate the concept of the present invention as applied to binders indicating that the circumference of the cavity 71 is the same or shorter than the circumference or perimeter of the protrusion 70 at the point of engagement. In Figure 21 the material is semi-flexible so that there is a tendency for the walls of the cavity 71 to straighten out whereas, in Figure 20 the material is slightly stiffer so that the cavity 71 does not deform as much but still has a shorter perimeter.

## Claims

1. A binder (51) for paper sheets (73) with holes, comprising a back member (53;77) with at least one protrusion (56;70;79) projecting therefrom, and a front member (52;76) with at least one opening (55;71;78) therein, the protrusion(s) (56;79) being so dimensioned as to receive paper sheets (73) with holes thereon and to be fitted and located in the opening(s) (55;71;78) in order to retain sheet (73) within the binder (51), one such binder (51) being connectable with a second such binder (51), characterized in that the opening(s) (55;71;78) is/are in the form of a cavity, and a projecting end opposite that open end of the cavity(ies) (55;71;78) of the front member (52;76) of one such binder (51) may be fitted and releasably held by a hollow end opposite the projecting protrusion(s) (56;70;79) of the back member (53;77) of a second such binder (51).

2. A binder (51) according to Claim 1, where the shape of the protrusion(s) (56;70;79) and/or the cavity(ies) (55;71;78) is axially symmetrical, and where the inside diameter of the cavity(ies) (55;71;78) is manufactured equal or smaller than the outside diameter of the protrusion(s) (56;70;79) at the level where they engage when fitted.

3. A binder (51) according to any of Claims 1 or 2, wherein the back member (63;77) and the front member (52;76) are made from the same or separate sheets of plastic.

4. A binder (51) according to any of the preceding claims wherein the binder (51) further comprises a front leaf (74) and a back leaf (75), and wherein the back member (77) is positioned on the back leaf (75) and the front member (76) is positioned on the front leaf (74), and where the back and/or the front member (77;76) is made from a separate sheet of plastics which is attached to the front and/or back leaf (74;75) respectively.

5. A binder (51) according to Claim 4, wherein the back member and/or the front member (76;77) is made from a long strip(s) of plastic sheet.

6. A method of forming a binder (51) for paper sheets (73) with holes, the binder (51) comprising a back member (53;77) with at least one protrusion (56;70;79) projecting therefrom, and a front member (52;76) with at least one cavity (55;71;78) therein, the protrusion(s) (56;79) being so dimensioned as to receive paper sheets (73) with holes thereon and to be fitted and located in the cavities (55;71;78) in order to retain sheets (73) within the binder (51), one such binder (51) being connectable with a second such binder (51), the method comprising the steps of:

(a) providing a first sheet of plastics,
(b) forming the back to member (53;77) with the protrusion(s) (56;70;79) from said first sheet,
(c) providing a second sheet of plastics,
(d) forming the front member (52;76) with the cavity(ies) from said second sheet,

the method being characterized by forming the front and back members (55;76,53;77) so that a projecting end opposite the open end of the cavities (55;71;78) of the front member (52;76) of one such binder (51) may be fitted and releasably held by a hollow end opposite the projecting protrusion(s) (56;70;79) of the back member (53;77) of a second such binder (51).

7. A method according to Claim 6, wherein the binder (51) comprises a front leaf (74) and a back leaf (75), the method comprising the steps of:

attaching the back member (77) to the back leaf (75), and/or attaching the front member (76) to the front leaf (74).

## Patentansprüche

1. Hefter (51) für Löcher aufweisende Papierblätter (73) mit einem mindestens einen abstehenden Vorsprung (56; 70; 79) aufweisenden Rückenteil (53; 77) und einem mindestens eine Öffnung (55; 71; 78) aufweisenden Vorderteil (55; 76), wobei der Vorsprung bzw. die Vorsprünge (56; 79) so dimensioniert ist bzw. dimensioniert sind, daß sie die Löcher aufweisenden Papierblätter (73) aufnehmen und zum Halten der Papierblätter (73) in die Öffnung bzw. die Öffnungen (55; 71; 78) hineinpassen und entsprechend angeordnet sind und wobei der Hefter (51) mit einem weiteren Hefter (51) verbindbar ist, **dadurch gekennzeichnet**, daß die Öffnung bzw. die Öffnungen (55; 71; 78) als Vertiefung bzw. Vertiefungen ausgeführt sind und daß ein dem offenen Ende der Vertiefung bzw. der Vertiefungen (55; 71; 78) des Vorderteils (52; 76) eines der Hefter (51) gegenüberliegendes vorstehendes Ende in ein dem Vorsprung bzw. den Vorsprüngen (56, 70; 79) des Rückenteils (53; 77) eines zweiten Hefters (51) gegenüberliegendes hohles Ende eingesteckt und lösbar gehalten werden kann.

2. Hefter (51) nach Anspruch 1, dadurch gekennzeichnet, daß die Form des Vorsprungs bzw. der Vorsprünge (56, 70, 79) und/oder der Vertiefung bzw. Vertiefungen (55; 71; 78) axialsymmetrisch ausgebildet ist und daß der Innendurchmesser der Vertiefung bzw. der Vertiefungen (55; 71; 78) gleich oder kleiner als der Außendurchmesser des Vorsprungs bzw. der Vorsprünge (56; 70; 79) auf der Höhe eines Eingriffsbereichs beim Einstecken ist.

3. Hefter (51) nach Anspruch 1 oder 2, dadurch gekennzeichnet, daß das Rückenteil (53, 77) und das Vorderteil (52, 76) aus der gleichen oder aus separaten Kunststoffplatten hergestellt sind.

4. Hefter (51) nach einem der voranstehenden Ansprüche, dadurch gekennzeichnet, daß der Hefter (51) des weiteren einen Vorderdeckel (74) und einen Rückdeckel (75) aufweist, daß das Rückenteil (77) auf dem Rückdeckel (75) und das Vorderteil (76) auf dem Vorderdeckel (74) positioniert ist und daß das Rückenteil (77) und/oder das Vorderteil (76) aus separaten Kunststoffplatten hergestellt und am Vorderdeckel (74) oder am Rückdeckel (75) befestigt ist bzw. sind.

5. Hefter (51) nach Anspruch 4, dadurch gekennzeichnet, daß das Rückenteil (77) und/oder das Vorderteil (76) aus einem langen bzw. aus langen Kunststoffstreifen hergestellt ist bzw. sind.

6. Verfahren zur Herstellung eines Hefters (51) für Löcher aufweisende Papierblätter (73), wobei der Hefter (51) ein Rückenteil (53; 77) mit mindestens einem vorstehenden Vorsprung (56; 70; 79) und ein Vorderteil (52; 76) mit mindestens einer darin ausgebildeten Vertiefung (55; 71; 78) aufweist, wobei der Vorsprung bzw. die Vorsprünge (56; 79) so dimensioniert sind, daß sie die Löcher aufweisenden Papierblätter (73) aufnehmen und zum Halten der Papierblätter (73) innerhalb des Hefters (51) in die Vertiefungen (55; 71, 78) hineinpassen und entsprechend angeordnet sind und wobei der Hefter (51) mit einem zweiten Hefter (51) verbindbar ist, mit folgenden Herstellschritten:

(a) Bereitstellen einer ersten Kunststoffplatte,
(b) Ausbilden des den Vorsprung bzw. die Vorsprünge (56, 70; 79) aufweisenden Rückenteils (53, 77) aus der ersten Kunststoffplatte,
(c) Bereitstellen einer zweiten Kunststoffplatte,
(d) Ausbilden des die Vertiefung bzw. Vertiefungen aufweisenden Vorderteils (52; 76) aus der zweiten Kunststoffplatte,
**dadurch gekennzeichnet,** daß die Vorderund Rückenteile (55; 76; 53; 77) derart ausgebildet werden, daß ein dem offenen Ende der Vertiefungen (55; 71; 78) des Vorderteils (52; 76) eines Hefters (51) gegenüberliegendes vorstehendes Ende in ein dem vorstehenden Vorsprung bzw. den vorstehenden Vorsprüngen (56; 70; 79) des Rückenteils (53; 77) eines zweiten Hefters (51) gegenüberliegendes hohles Ende hineinpaßt und dort lösbar gehalten wird.

7. Verfahren nach Anspruch 6, wobei der Hefter (51) einen Vorderdeckel (74) und einen Rückdeckel (75) aufweist, dadurch gekennzeichnet,
daß das Rückenteil (77) an dem Rückdeckel (75) und/oder das Vorderteil (76) an dem Vorderdeckel (74) befestigt wird bzw. werden.

## Revendications

1. Reliure (51) pour feuilles de papier (73) avec des trous, comprenant un organe arrière (53;77) avec au moins une protubérance (56;70;79) faisant saillie de celui-ci, et un organe avant (52,76), avec au moins une ouverture (55,71;78) en son sein, la (les) protubérance(s) (56;79) étant dimensionnée(s) de façon à recevoir sur elles des feuilles de palier (73) avec des trous et à se monter et se positionner dans l'(les) ouverture(s) (55;71;78), de manière à maintenir la feuille (73) à l'intérieur de la reliure (51), une telle reliure (51) de ce type pouvant être reliée à une seconde reliure (51) du même type, caractérisée en ce que l'(les) ouverture(s) (55;71;78) se présente(nt) sous la forme d'une cavité, et une extrémité protubérante opposée à l'extrémité ouverte de la ou des cavité(s) (55;71;78) de l'organe avant (52;76) d'une telle reliure (51) de ce type peut se monter et être maintenue amovible, grâce à une extrémité creuse, opposée à la (aux) protubérance(s) (56;70;79) faisant saillie, de l'organe arrière (53;77) d'une seconde reliure (51) de ce type.

2. Reliure (51) selon la revendication 1, dans laquelle la forme de la (des) protubérance(s) (56;70;79) et/ou de la (des) cavité(s) (55;71;78) est axialement symétrique, et dans laquelle le diamètre intérieur de la (des) cavité(s) (55;71;78) résultant de la fabrication est égal ou inférieur au diamètre extérieur de la (des) protubérance(s) (56;70;79), au niveau où se fait le contact lors du montage.

3. Reliure (51) selon l'une quelconque des revendications 1 ou 2, dans laquelle l'organe arrière (63;77) et l'organe avant (52;76) sont produits à partir de la même feuille, ou de feuilles séparées, en matière synthétique.

4. Reliure (51) selon l'une quelconque des revendications précédentes, dans laquelle la reliure (51) comprend en outre une feuille avant (74) et une feuille arrière (75), et dans laquelle l'organe arrière (77) est positionné sur la feuille arrière (75) et l'organe avant (76) est positionné sur la feuille avant (74), et dans laquelle l'organe arrière et/ou l'organe avant (77;76) est constitué d'une feuille séparée en matière synthétique, fixée respectivement à la feuille avant et/ou arrière (74;75).

5. Reliure (51) selon la revendication 4, caractérisé en ce que l'organe avant et/ou l'organe arrière (76;77) est/sont constitué(s) d'une longue bande en matière synthétique.

6. Procédé de formage d'une reliure (51) pour feuilles de papier (73) avec des trous, la reliure (51) comprenant un organe arrière (53;77) avec au moins une protubérance (56;70;79) faisant saillie de celui-ci, et un organe avant (52,76), avec au moins une cavité (55,71;78) en son sein, la (les) protubérance(s) (56;79) étant dimensionnée(s) de façon à recevoir sur elles des feuilles de palier (73) avec des trous et à se monter et se positionner dans les cavités (55;71;78), de ma manière à maintenir des feuilles (73) à l'intérieur de la reliure (51), une reliure (51) de ce type pouvant être reliée à une seconde reliure (51) du même type, le procédé comprenant les étapes suivantes:

(a) produire une première feuille en matière synthétique,

(b) former le dos de l'organe (53;77), avec la (les) protubérance(s) (56;70;79) faisant saillie de ladite première feuille,

(c) produire une deuxième feuille en matière synthétique,

(d) former l'organe avant (52;76), avec la (les) cavité(s) de ladite deuxième feuille,

le procédé étant caractérisé par le fait de former les organes avant et arrière (55;76,53;77), de façon qu'une extrémité faisant saillie, opposée à l'extrémité ouverte des cavités (55,;71;78) de l'organe avant (52;76) d'un première reliure (51) de ce type puisse être montée et maintenue amovible, grâce à une extrémité creuse, opposée à la (aux) protubérance(s) (56;70;79) faisant saillie, de l'organe arrière (53;77) de la seconde reliure (51) de ce type.

7. Procédé selon la revendication 6, dans lequel la reliure (51) comprend une feuille avant (74) et une feuille arrière (73), le procédé comprenant l'étape consistant à :

fixer l'organe arrière (77) à la feuille arrière (75), et/ou fixer l'organe avant (76) à la feuille avant (74).

FIG. 1

FIG. 2

FIG. 3

FIG. 4

FIG. 5

FIG. 6

FIG. 7

57

FIG. 8

58

FIG. 9

55

56

*FIG. 10*

*FIG. 11*

70  71  73  72

82  82  82  70

*FIG. 12*  *FIG. 13*

78  79  75

76  77  76  79

74  75  78  77

74  78  76

72  80

FIG. 14

70

74, 76

75, 77

71

FIG. 15

74

70

71

76

77

75

FIG. 16

71'

76'

74

70'

70

75

77'

71

FIG. 17

81

70

81

71

FIG. 18

71

70

73

81

81

FIG.19

FIG.20

FIG. 21